(19) Europäisches Patentamt
European Patent Office
Office européen des brevets

(11) **EP 3 475 558 B1**

(12) **EUROPÄISCHE PATENTSCHRIFT**

(45) Veröffentlichungstag und Bekanntmachung des Hinweises auf die Patenterteilung:
**04.09.2024  Patentblatt 2024/36**

(21) Anmeldenummer: **17730791.5**

(22) Anmeldetag: **19.06.2017**

(51) Internationale Patentklassifikation (IPC):
**F03D 1/06** *(2006.01)*   **F03D 13/10** *(2016.01)*
**B66C 13/06** *(2006.01)*   **B66C 1/34** *(2006.01)*
**B66C 23/20** *(2006.01)*

(52) Gemeinsame Patentklassifikation (CPC):
**F03D 13/10; B66C 1/34; B66C 13/06;**
**B66C 23/207; F03D 1/0658;** Y02E 10/72

(86) Internationale Anmeldenummer:
**PCT/EP2017/064869**

(87) Internationale Veröffentlichungsnummer:
**WO 2017/220459 (28.12.2017 Gazette 2017/52)**

(54) **VERFAHREN ZUM ERRICHTEN EINER WINDENERGIEANLAGE UND HEBETRAVERSE ZUR MONTAGE EINES ROTORBLATTS EINER WINDENERGIEANLAGE**

METHOD OF ERECTING A WIND TURBINE AND LIFTING TRAVERSE FOR THE INSTALLATION OF A ROTOR BLADE OF A WIND TURBINE

MÉTHODE D'ÉRIGER UNE ÉOLIENNE ET TRAVERSE POUR L'INSTALLATION D'UNE PALE DE ROTOR D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2016  DE 102016111514**

(43) Veröffentlichungstag der Anmeldung:
**01.05.2019  Patentblatt 2019/18**

(73) Patentinhaber: **Wobben Properties GmbH**
**26607 Aurich (DE)**

(72) Erfinder: **KNOOP, Frank**
**26607 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 1 577 254      EP-A1- 3 034 450**
**GB-A- 1 002 758      US-A1- 2016 002 010**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Errichten einer Windenergieanlage sowie eine Hebetraverse zur Montage eines Rotorblatts einer Windenergieanlage.

Bei der Montage der Rotorblätter einer Windenergieanlage sind die Rotorblätter den Witterungsbedingungen ungeschützt ausgesetzt. Eine Montage von Rotorblättern einer Windenergieanlage ist gemäß EN 13000 nur bis zu einer bestimmten Windgeschwindigkeit zulässig. Sollte diese Windgeschwindigkeit überschritten werden, darf das Rotorblatt nicht montiert werden.

In der prioritätsbegründenden deutschen Patentanmeldung hat das Deutsche Patent- und Markenamt das folgende Dokument recherchiert: Prospekt Rotorblatttraverse Ematec, 2014.

Die Dokumente EP 3 034 450, US 2016/002010 und GB 1 002 758 beziehen sich auf den Bereich des Hebens und der Steuerung von angehobenen Lasten.

Es ist somit eine Aufgabe der vorliegenden Erfindung ein Verfahren zum Errichten einer Windenergieanlage vorzusehen, welche auch bei höheren Windgeschwindigkeiten erfolgen kann.

Diese Aufgabe wird durch ein Verfahren zum Errichten einer Windenergieanlage nach Anspruch 1 sowie durch eine Verwendung einer Hebetraverse nach Anspruch 4 gelöst.

Damit wird ein Verfahren zum Errichten einer Windenergieanlage vorgesehen, welche einen aerodynamischen Rotor mit Rotorblattanschlüssen aufweist. Eine Hebetraverse weist eine Ballasteinheit auf und wird an einem Kranhaken eines Krans befestigt. Ein Rotorblatt wird mittels Hebeseile an einem zweiten Kranhaken an einer Unterseite der Ballasteinheit befestigt. Die Hebetraverse und das Rotorblatt werden durch den Kran zur Montage des Rotorblattes an einen der Rotorblattanschlüsse angehoben. Die Ballasteinheit dient dazu, das Gesamtgewicht der Hebetraverse zu erhöhen, damit ein Rotorblatt auch bei höheren Windgeschwindigkeiten montiert werden kann.

Gemäß einem Aspekt der vorliegenden Erfindung weist die Ballasteinheit mindestens ein Ballastgewicht auf und das Ballastgewicht ist so ausgewählt, dass das Verhältnis zwischen der Fläche des Rotorblattes und der Summe aus dem Ballastgewicht und dem Gewicht des Rotorblattes $\leq 1$ ist.

Gemäß einem Aspekt der vorliegenden Erfindung wird eine Windeneinheit an dem Rotor der Windenergieanlage vorgesehen. An der Rotorblattwurzel des zu montierenden Rotorblattes wird an einem Haken der Windeneinheit befestigt. Das Rotorblatt wird mittels der Windeneinheit und dem Kran angehoben.

Die vorliegende Erfindung betrifft ebenfalls die Verwendung einer Hebetraverse zur Montage eines Rotorblatts einer Windenergieanlage gemäß Anspruch 4. Die Hebetraverse weist eine Ballasteinheit und mindestens einen Einhängepunkt zur Aufnahme eines Kranhakens an einer Oberseite der Ballasteinheit auf. Ferner weist die Hebetraverse einen Haken an der Unterseite der Ballasteinheit und ein Ballastgewicht auf.

Gemäß einem Aspekt der vorliegenden Erfindung wird ein Rotorblatt der Windenergieanlage über eine Hebetraverse an einen Kranhaken befestigt, um das Rotorblatt dann anschließend hochzuziehen. Die Hebetraverse weist eine Ballasteinheit mit mindestens einem Ballastgewicht auf. Die Verwendung von Ballastgewichten in der Hebetraverse bei der Montage der Rotorblätter dient dazu, das Gesamtgewicht (Rotorblätter + Traverse) zu erhöhen. Eine Erhöhung des durch den Kran zu transportierenden Gewichtes erscheint zunächst kontraproduktiv, hat jedoch den Vorteil, dass damit das Verhältnis zwischen der Fläche der Rotorblätter zu der Last der Rotorblätter erhöht wird.

Die Formel zur Berechnung der maximal zulässigen Windgeschwindigkeiten bei der Montage der Rotorblätter hängt von dem verwendeten Mobilkran ab und wird nach EN13000 ermittelt. Insbesondere ist das Verhältnis Fläche des zu montierenden Bauteils zu der Last des Bauteils von großer Bedeutung. Bei der maximal zulässigen Windgeschwindigkeit darf das Verhältnis von Fläche zu Last nicht größer als 1 sein. Bei den modernen Rotorblättern von Windenergieanlagen kann dieses Verhältnis jedoch deutlich größer als 1 sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.

Fig. 1      zeigt eine schematische Darstellung einer Windenergieanlage gemäß der Erfindung,

Fig. 2      zeigt eine schematische Darstellung einer Windenergieanlage bei der Montage eines Rotorblatts gemäß einem ersten Ausführungsbeispiels der Erfindung,

Fig. 3      zeigt eine schematische Darstellung einer Hebetraverse gemäß der Erfindung und

Fig. 4      zeigt eine schematische Darstellung eines Teils einer Windenergieanlage gemäß einem zweiten Ausführungsbeispiel der Erfindung.

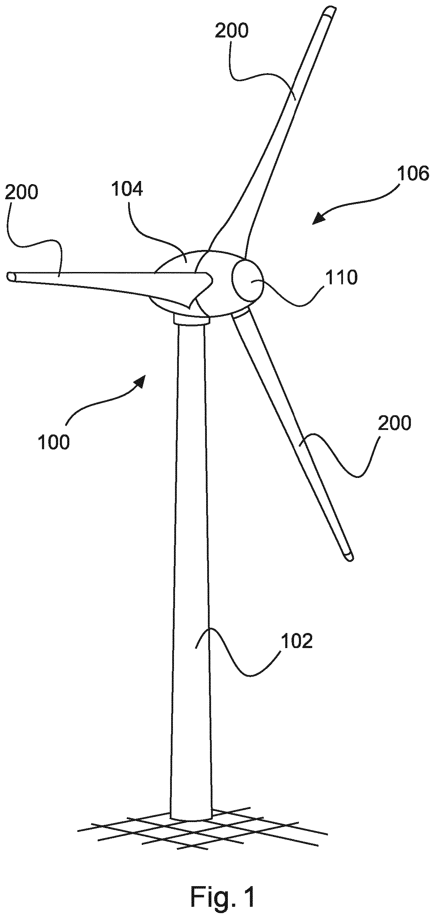

Fig. 1 zeigt eine schematische Darstellung einer Windenergieanlage. Fig. 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird im Betrieb durch den Wind in eine Drehbewegung versetzt und treibt dadurch einen Generator in der Gondel 104 an.

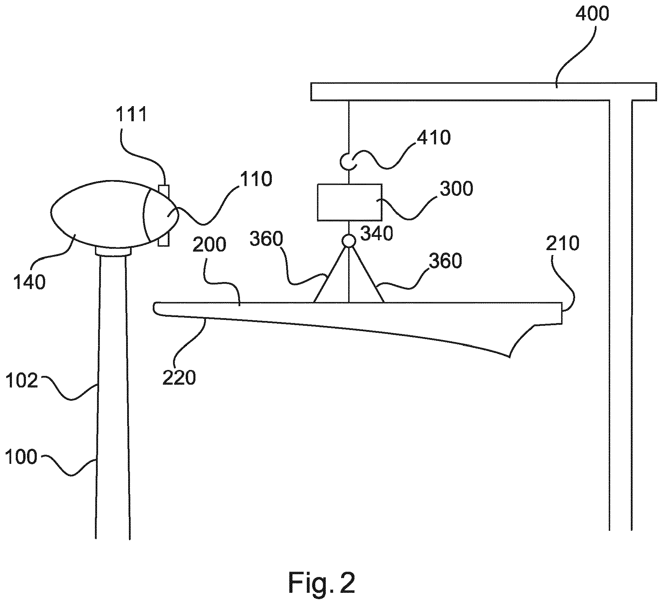

Fig. 2 zeigt eine schematische Darstellung einer Windenergieanlage bei der Montage eines Rotorblattes gemäß einem Ausführungsbeispiel der Erfindung. Die Windenergieanlage 100 weist einen Turm 102, eine Gondel 104 und einen Spinner 110 auf. An dem Spinner sind die Rotorblattanschlüsse 111 vorgesehen. Das Rotorblatt 200 weist eine Rotorblattwurzel 210 und eine Rotorblattspitze 220 auf. Mittels eines Krans 400 und eines ersten Hakens (Kranhaken) 410 wird eine Hebetraverse 300 mit einem zweiten Haken 340 wird ein Rotorblatt 200 angehoben, um das Rotorblatt 200 an dem Spinner 110 der Windenergieanlage 100 zu befestigen. Der Kranhaken 410 ist mit einer Hebetraverse 300 gekoppelt, welche einen zweiten Kranhaken 340 aufweist, über welchen mittels Hebeseile 360 das Rotorblatt 200 angehoben wird. Der Kran 400 muss somit sowohl das Rotorblatt 200 als auch die Belasteinheit bzw. die Hebetraverse 300 anheben.

Gemäß der Erfindung wird eine Hebetraverse mit einer Belasteinheit 300 verwendet, um das durch den Kran 400 zu hebende Gewicht zu erhöhen. Die Erfindung beruht auf dem Gedanken, durch die Erhöhung des durch den Kran 400 zu hebenden Gewichts auch das Verhältnis zwischen der Fläche des zu montierenden Bauteils (hier ein Rotorblatt) zu dem Gewicht des Bauteils zu senken, in dem das zu hebende Gewicht durch das Belastgewicht der Belasteinheit 300 erhöht wird. Damit kann gewährleistet werden, dass das Rotorblatt auch bei höheren Windgeschwindigkeiten montiert werden kann.

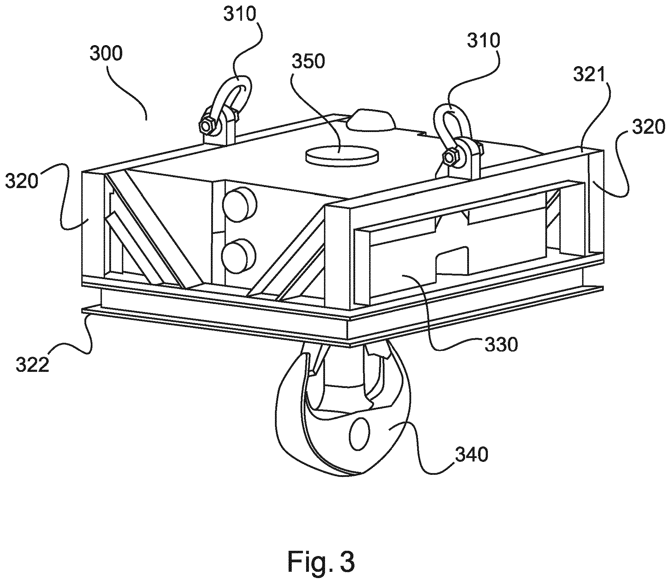

Fig. 3 zeigt eine schematische Darstellung einer Hebetraverse gemäß der Erfindung. Die Hebetraverse 300 weist an ihrer oberen Seite mindestens ein, vorzugsweise zwei, Einhängpunkte 310 auf, mittels welcher die Hebetraverse an einem Kranhaken 410 zu befestigen ist. Optional kann die Hebetraverse 300 einen Rahmen 320 zur Aufnahme von Ballastgewichten 330 aufweisen. An der Unterseite der Hebetraverse 300 ist ein zweiter Kranhaken 340 vorgesehen, an welchem die Hebeseile 360 für das Rotorblatt 200 befestigt werden können. Dieser zweite Kranhaken 340 kann drehbar ausgestaltet sein. An dem Rahmen 320 können Anschlagpunkte 321 für Führungsseile vorgesehen sein. Gemäß einem Aspekt der vorliegenden Erfindung kann eine Sicherungseinheit 350 vorgesehen sein, welche die Ballastgewichte 330 im montierten Zustand sichert.

Die Ballastgewichte 330 können innerhalb des Rahmens befestigt werden.

Gemäß einem Aspekt der vorliegenden Erfindung kann eine Abstellmöglichkeit oder bzw. Abstelleinheit 322 vorgesehen sein, mittels welcher die Traverse auch bei montiertem zweiten Kranhaken 340 auf einen Boden abgestellt werden kann.

Nachfolgend wird die Berechnung der zulässigen Windgeschwindigkeit für den Hub eines Rotorblattes erläutert:

$A_W = A_P * c_W$ [Formel für die Berechnung der Windangriffsfläche]

$A_W = 135m^2 * 1{,}1$

$A_W = 148{,}5m^2$

[Formel zur Berechnung der zulässigen Windgeschwindigkeit]

$$V_{max} = V_{max\ Tab} * \sqrt{\frac{1{,}2\frac{m^2}{t} * m_H}{A_W}}$$

$$V_{max\,1} = 9\frac{m}{s} * \sqrt{\frac{1{,}2\frac{m^2}{t} * 30t}{148{,}5m^2}}$$

$$V_{max\,1} = 4{,}43\frac{m}{s}$$ (Maximal zulässige Windgeschwindigkeit für den Hub eines Rotorblattes)

Die Berechnung der zulässigen Windgeschwindigkeit für den Hub eines Rotorblattes und der Erhöhung der Masse durch Verwendung einer zusätzlichen Traverse mit Ballastgewichten des Montagekrans erfolgt wie folgt:

$A_W = 148{,}5m^2$ (Annahme, dass sich die Windangriffsfläche nicht ändert, obwohl sich eine Aufteilung zwischen Hilfswinde und Montagekran ergibt)

(fortgesetzt)

(Annahme, dass der Montagekran über eine Hubkraft von 80t verfügt, die auch für die Montage der Gondelkomponenten notwendig ist)

$$V_{max\,2} = 9\frac{m}{s} * \sqrt{\frac{1,2\frac{m^2}{t}*80t}{148,5m^2}}$$

$$V_{max\,2} = 7,24\frac{m}{s}$$

(Maximal zulässige Windgeschwindigkeit für den Hub eines Rotorblattes durch Nutzung von Zusatzballast)

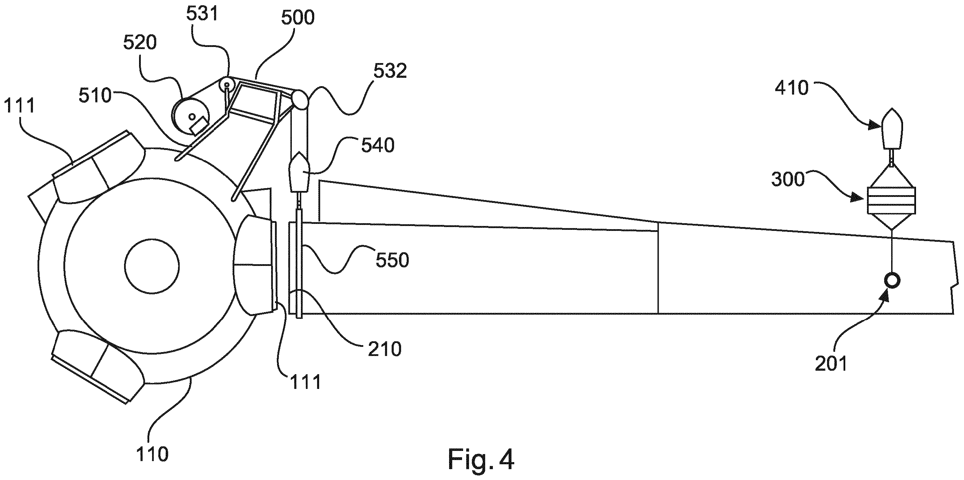

Fig. 4 zeigt eine schematische Darstellung eines Teils einer Windenergieanlage gemäß einem zweiten Ausführungsbeispiel der Erfindung. In Fig. 4 ist ein Spinner 110 der Windenergieanlage 100 zusammen mit einer Windeneinheit 500 gezeigt. Die Windeneinheit 500 kann an dem Spinner 110 befestigt und weist einen Rahmen 510, eine Winde 520 sowie zwei Umlenkrollen 531, 532 auf. Ferner weist die Windeneinheit 500 einen Haken 540 auf. An diesem Haken 540 kann eine Rotorblattwurzel 210 eines zu montierenden Rotorblattes 200, beispielsweise mittels einer Schlinge 550 befestigt werden. Ein Kran mit seinem Kranhaken 410 kann eine Hebetraverse 300 gemäß dem ersten Ausführungsbeispiel anheben, welche wiederum über ein Hebeseil mit dem Rotorblatt 200 und insbesondere einem Anpickpunkt 201 verbunden ist. Das Rotorblatt 200 wird somit mittels des Krans und der Windeneinheit 500 angehoben. Dies ist vorteilhaft, weil damit auf eine Führung mit Seilwinden verzichtet werden kann. Dies erweist sich insbesondere als vorteilhaft für Waldstandorte.

Die Berechnung der zulässigen Windgeschwindigkeit für den Hub eines Rotorblattes und der Erhöhung der Masse durch Verwendung einer zusätzlichen Traverse mit Ballastgewichten des Montagekrans und der Berücksichtigung der Lastaufteilung zwischen Hilfsvorrichtung und Montagekran erfolgt wie folgt:

(Annahme, das 1/3 der Fläche auf den Kran wirken)

$$A_{W1} = \frac{2}{3}135m^2 * 1,1$$

$A_W = 99m^2$

$A_{w2} = 5m^2 * 1,6$                    (Fläche der Traverse mit Zusatzballast)

$A_{W2} = 8m^2$

$$V_{max\,3} = 9\frac{m}{s} * \sqrt{\frac{1,2\frac{m^2}{t}*80t}{107m^2}}$$

$$V_{max\,3} = 8,5\frac{m}{s}$$

Gemäß der Erfindung kann unter Zuhilfenahme der Hebetraverse bei der Montage der Rotorblätter die zulässige Maximalgeschwindigkeit erheblich gesteigert werden. Durch Verwendung der Hebetraverse mit der Ballasteinheit kann die maximal zulässige Windgeschwindigkeit von $4,4m^2$ auf $7,2m^2$ gesteigert werden. Wenn die Windeneinheit gemäß einem Aspekt der vorliegenden Erfindung verwendet wird, dann kann die zulässige Windgeschwindigkeit auf 8,5m/s gesteigert werden. Dies ist insbesondere vorteilhaft, weil somit das Rotorblatt auch bei höheren Windgeschwindigkeiten montiert werden kann.

**Patentansprüche**

1. Verfahren zum Errichten einer Windenergieanlage (100), welche einen aerodynamischen Rotor (110) mit Rotorblattanschlüssen (111) aufweist, mit den Schritten:

    Befestigen einer Ballasteinheit (300) an einer Hebetraverse (300),
    Befestigen der Hebetraverse (300) mit der Ballasteinheit (300) an einem Kranhaken (410) eines Krans (400),
    Befestigen eines Rotorblattes (200) mittels Hebeseile (360) an einem zweiten Kranhaken (340) an einer Unterseite der Ballasteinheit (300), und

Anheben der Hebetraverse (300) mit der Ballasteinheit und des Rotorblattes (200) durch den Kran (400) zur Montage des Rotorblattes (200) an einen der Rotorblattanschlüsse (111),
wobei die Ballasteinheit (300) mindestens ein Ballastgewicht (330) aufweist und das Ballastgewicht so gewählt ist, dass das Verhältnis in m$^2$/t zwischen der Windangriffsfläche des Rotorblattes (200) und der Summe aus dem Ballastgewicht (330) und dem Gewicht des Rotorblattes (200) ≤ 1 ist.

2. Verfahren nach Anspruch 1, ferner mit den Schritten:

Vorsehen einer Windeneinheit (500) an dem Rotor (110) der Windenergieanlage (100),
Befestigen einer Rotorblattwurzel (210) des zu montierenden Rotorblattes (200) an einem Haken (540) der Windeneinheit (500), und
Anheben des Rotorblattes (200) mittels der Windeneinheit (500) und dem Kran (400).

3. Verfahren nach Anspruch 1 oder 2,
wobei die Hebetraverse (300) einen Rahmen (330) zur Aufnahme des mindestens einen Ballastgewichtes (330) aufweist.

4. Verwendung einer Hebetraverse (300) zur Montage eines Rotorblattes (200) einer Windenergieanlage (100),

wobei die Hebetraverse (300) eine Ballasteinheit (300) aufweist, die mindestens einen Einhängepunkt (310) zur Aufnahme eines Kranhakens (410) an einer Oberseite der Ballasteinheit (300), einen Haken (340) an der Unterseite der Ballasteinheit (300) und ein Ballastgewicht (330) aufweist,
wobei die Ballasteinheit (300) mindestens ein Ballastgewicht (330) aufweist und das Ballastgewicht so gewählt ist, dass das Verhältnis in m$^2$/t zwischen der Windangriffsfläche des Rotorblattes (200) und der Summe aus dem Ballastgewicht (330) und dem Gewicht des Rotorblattes (200) ≤ 1 ist,
wobei das Rotorblatt (200) mittels der Hebetraverse (300) angehoben wird, um das Rotorblatt (200) an einem Rotorblattanschluss (111) zu montieren.

## Claims

1. A method of erecting a wind power installation (100) which has an aerodynamic rotor blade (110) having rotor blade connections (111), comprising the steps:

fixing a ballast unit (300) to a lifting beam (300),
fixing the lifting beam (300) with the ballast unit (300) to a crane hook (410) of a crane (400),
fixing a rotor blade (200) by means of lifting cables (360) to a second crane hook (340) at an underside of the ballast unit (300), and
lifting the lifting beam (300) with the ballast unit and the rotor blade (200) by the crane (400) for mounting the rotor blade (200) at one of the rotor blade connections (111),
wherein the ballast unit (300) has at least one ballast weight (330) and the ballast weight is so selected that the ratio in m$^2$/t between the wind attack area of the rotor blade (200) and the sum of the ballast weight (330) and the weight of the rotor blade (200) is < 1.

2. A method according to claim 1, further comprising the steps:

providing a winch unit (500) at the rotor (110) of the wind power installation (100),
fixing a rotor blade root (210) of the rotor blade (200) to be mounted to a hook (540) of the winch unit (500), and
lifting the rotor blade (200) by means of the winch unit (500) and the crane (400).

3. A method according to claim 1 or 2, wherein
the lifting beam (300) comprises a frame (330) for receiving the at least one ballast weight (330).

4. Use of a lifting beam (300) for mounting a rotor blade (200) of a wind power installation (100),

wherein the lifting beam (300) comprises a ballast unit (300) which has at least one suspension point (310) for receiving a crane hook (410) at a top side of the ballast unit (300), a hook (340) at the underside of the ballast unit (300) and a ballast weight (330),

wherein the ballast unit (300) has at least one ballast weight (330) and the ballast weight is so selected that the ratio in m$^2$/t between the wind attack area of the rotor blade (200) and the sum of the ballast weight (330) and the weight of the rotor blade (200) is < 1,

wherein the rotor blade (200) is lifted by means of the lifting beam (300) to mount the rotor blade (200) at a rotor blade connection (111).

**Revendications**

1. Procédé pour ériger une éolienne (100), laquelle présente un rotor (110) aérodynamique avec des raccordements de pale de rotor (111), avec les étapes de :

   fixation d'une unité de lestage (300) sur une traverse de levage (300),
   fixation de la traverse de levage (300) avec l'unité de lestage (300) sur un crochet de grue (410) d'une grue (400),
   fixation d'une pale de rotor (200) au moyen de câbles de levage (360) sur un deuxième crochet de grue (340) sur une face inférieure de l'unité de lestage (300), et
   levage de la traverse de levage (300) avec l'unité de lestage et de la pale de rotor (200) par la grue (400) pour le montage de la pale de rotor (200) sur un des raccordements de pale de rotor (111),
   dans lequel l'unité de lestage (300) présente au moins un poids de lestage (330) et le poids de lestage est choisi de sorte que le rapport en m$^2$/t entre la surface au vent de la pale de rotor (200) et la somme du poids de lestage (330) et du poids de la pale de rotor (200) est $\leq$ 1.

2. Procédé selon la revendication 1, en outre avec les étapes de :

   prévision d'une unité de treuil (500) sur le rotor (110) de l'éolienne (100),
   fixation d'un pied de pale de rotor (210) de la pale de rotor (200) à monter sur un crochet (540) de l'unité de treuil (500), et
   levage de la pale de rotor (200) au moyen de l'unité de treuil (500) et de la grue (400).

3. Procédé selon la revendication 1 ou 2,
   dans lequel la traverse de levage (300) présente un cadre (330) pour la réception de l'au moins un poids de lestage (330).

4. Utilisation d'une traverse de levage (300) pour le montage d'une pale de rotor (200) d'une éolienne (100),

   dans laquelle la traverse de levage (300) présente une unité de lestage (300) qui présente au moins un point d'accrochage (310) pour la réception d'un crochet de grue (410) sur une face supérieure de l'unité de lestage (300), un crochet (340) sur la face inférieure de l'unité de lestage (300) et un poids de lestage (330),
   dans laquelle l'unité de lestage (300) présente au moins un poids de lestage (330) et le poids de lestage est choisi de sorte que le rapport en m$^2$/t entre la surface au vent de la pale de rotor (200) et la somme du poids de lestage (330) et du poids de la pale de rotor (200) $\leq$ 1,
   dans lequel la pale de rotor (200) est levée au moyen de la traverse de levage (300) afin de monter la pale de rotor (200) sur un raccordement de pale de rotor (111) .

Fig. 1

Fig. 2

Fig. 3

Fig. 4

**EP 3 475 558 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3034450 A
- US 2016002010 A
- GB 1002758 A